(19) Europäisches Patentamt
European Patent Office
Office européen des brevets

(11) **EP 1 154 369 A2**

(12) **EUROPÄISCHE PATENTANMELDUNG**

(43) Veröffentlichungstag:
**14.11.2001 Patentblatt 2001/46**

(51) Int Cl.7: **G06K 9/00**

(21) Anmeldenummer: **01106668.5**

(22) Anmeldetag: **16.03.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **08.04.2000 DE 10017551**

(71) Anmelder: **Carl Zeiss Vision GmbH**
**85399 Halbergmoos (DE)**

(72) Erfinder: **Delong, Wolf-Rüdiger**
**91056 Erlangen (DE)**

(74) Vertreter: **Gnatzig, Klaus**
**Carl Zeiss**
**Patentabteilung**
**73446 Oberkochen (DE)**

(54) **Verfahren zur zyklischen, interaktiven Bildanalyse sowie Computersystem und Computerprogramm zur Ausführung des Verfahrens**

(57) Die Erfindung betrifft ein Verfahren zur zyklischen interaktiven Bildanalyse mit den Schritten

- Auswahl interessierender Bildbereiche im Bild durch den Benutzer,
- Durchführen verschiedener vorprogrammierter Transformationen am Bild in allen Bildpunkten,
- Durchführen einer Normierung der Transformationsergebnisse,

- Unterteilung des gesamten normierten Transformationsraumes in Klassen mit Hilfe von Trennvorschriften, die von den Transformationsergebniswerten in den von dem Benutzer ausgewählten Bildbereichen abgeleitet sind,
- Zuordnen der im Transformationsraum erhaltenen Klassifizierung zu den einzelnen Bildpunkten, und
- Darstellung des so klassifizierten Bildes im Bildraum.

FIG. 1

**Beschreibung**

Die vorliegende Erfindung betrifft ein Verfahren zur zyklischen, interaktiven Bildanalyse, sowie ein Computersystem und ein Computerprogramm zur Durchführung eines entsprechenden Verfahrens.

Viele heute bekannte Bildverarbeitungsverfahren arbeiten nach der sogenannten fraktalen Hierarchie, in der die Bildverarbeitung in zwei Schritten erfolgt. In einem ersten Segmentierungsschritt wird das Bild im Ortsraum segmentiert, das heißt in verschiedene Bereiche geteilt. Die Segmentierung erfolgt dabei nach Hierarchiestufen, wobei in der untersten Hierarchiestufe jedes Pixel des Bildes ein Segment darstellt. Für die jeweils nächst höhere Hierarchiestufe werden die zwei Nachbarsegmente zusammengefaßt, die den geringsten Zuwachs des Produktes aus Anzahl der Pixel und der Varianz des Farb- oder Grauwertes für das zusammengefaßte Segment erzeugen. Die Auswahl der Segmente erfolgt dabei stochastisch. Weiterhin erfolgt eine Randbehandlung der Segmente, in der für jedes Randpixel eines Segmentes überprüft wird, ob es vielleicht besser zum Nachbarsegment gehört. Gegebenenfalls wird es diesem zugeordnet. Die theoretisch höchste Hierarchiestufe besteht nur noch aus einem einzigen Segment. Die Hierarchiestufen untereinander haben die Eigenschaft, daß Segmentgrenzen einer Hierarchiestufe in der darunterliegenden Hierarchiestufe erhalten bleiben, das heißt die Segmente sind stets echte Teilmengen der darüber liegenden Segmente der höheren Hierarchiestufe.

In einem nachfolgenden Klassifizierungsschritt erfolgt eine semantische Klassifizierung, das heißt aus den gebildeten Segmenten werden Objekte mit einem Namen erzeugt. Dabei werden aus einem Satz von vordefinierten Eigenschaften der Segmente in allen Hierarchiestufen Regeln für die Bildung von Objekten angegeben. Die Regeln werden als Fuzzi-Regeln formuliert.

Entsprechende Bildverarbeitungsverfahren sind beispielsweise in der DE 196 25 906 A1, der DE 197 05 017 Alund in der WO 99/40539 beschrieben. Die betreffenden Verfahren laufen dabei entweder mehr oder minder vollautomatisch oder interaktiv ab.

Das Hauptproblem bei der Bildanalyse ist, daß die zu analysierenden Bilder völlig unterschiedliche, im Vorfeld nicht bekannte und zum Teil hochkomplexe Bildinformationen aufweisen können und zusätzlich im Vorfeld nicht bekannt ist, welche im zu analysierenden Bild enthaltene Bildinformation dem Nutzer wichtig ist. Für eine universelle Anwendbarkeit erfordern die bekannten Bildverarbeitungsverfahren daher sowohl einen sehr großen Programmieraufwand bei deren Erstellung als auch später vom Nutzer umfangreiche Erfahrung in der Auswahl geeigneter Segmentierungs- und Klassifizierungsvorschriften.

Es ist das Ziel der vorliegenden Erfindung, ein Bildanalyseverfahren anzugeben, das sich zyklisch und interaktiv den Wünschen und Vorstellungen eines Nutzers annähern kann, ohne daß der Nutzer Detailkenntnisse über die Bildverarbeitung selbst aufweisen muß.

Dieses Ziel wird durch ein Verfahren mit den Merkmalen des Anspruches 1, durch ein Computersystem mit den Merkmalen des Anspruches 12 und Computerprogramme mit den Merkmalen der Ansprüche 13 und 14 gelöst.

Das erfindungsgemäße Verfahren gemäß Anspruch 1ist interaktiv in dem Sinne, daß der Nutzer im Schritt a) ihn interessierende oder zu unterscheidende Bildbereiche im Bild auswählen oder kennzeichnen kann und dem Nutzer nach Durchführung der Bildanalyse im Schritt f) ein klassifiziertes Bild im Bildraum dargeboten wird. Nach dessen Begutachtung kann der Nutzer die Kriterien für die Bereiche erneut anpassen. Während des Ablaufs des erfindungsgemäßen Verfahrens ist jedoch kein Eingriff des Nutzers vorgesehen.

Das erfindungsgemäße Verfahren arbeitet zyklisch in dem Sinne, daß die Schritte a) bis f) oder b) bis f) mehrfach nacheinander durchgeführt werden können, bis der Nutzer mit dem dargebotenen Ergebnis der Bildanalyse zufrieden ist.

Beim erfindungsgemäßen Verfahren erfolgt zwar wie beim Stand der Technik auch eine Segmentierung, jedoch wird diese Segmentierung in einem Transformationsraum durchgeführt. Dazu werden zunächst verschiedene vorprogrammierte und abgespeicherte Transformationen am Bild in allen Bildpunkten oder in allen Bildpunkten eines ausgewählten Bereiches durchgeführt. Nachfolgend erfolgt eine Normierung der Ergebnisse der durchgeführten Transformationen im Transformationsraum. Im Anschluß daran wird der gesamte normierte Transformationsraum in Klassen eingeteilt, wobei die Trennvorschriften für die Klassifizierung von den Transformationsergebniswerten in den vom Benutzer ausgewählten Bildbereichen automatisch abgeleitet werden. Die im Transformationsraum erhaltene Klassifizierung wird anschließend wiederum den einzelnen Bildpunkten zugeordnet und somit nachfolgend ein dem Transformationsraum entsprechend klassifiziertes Bild im ursprünglichen Bildraum dargestellt.

Die vorliegende Erfindung geht von der Voraussetzung aus, daß der Nutzer bei einem Bild immer eine gewisse Vorstellung von dem hat, was in dem Bild für seine Zwecke als zusammengehörig aufgefaßt werden sollte. Diese eigene Vorstellung teilt der Nutzer dem Computer bzw. dem Bildanalyse-Programm durch grob eingezeichnete, beliebig umrandete Gebiete im Bild mit. Aufgrund dieser interaktiven Zielvorgaben entwickelt das Bildanalyse-Programm eine eigene Interpretation der Vorstellungen des Benutzers und zeigt dem Benutzer die entwickelte Vorstellung. Der Benutzer kann nun diese von dem Bildanalyse-Programm erstellte "Maschinenvorstellung"durch weitere interaktiven Eingriffe modifizieren, wodurch das Bildanalyse-Programm die "Maschinenvorstellung" im Sinne des Benutzers korrigiert.

Auf diese Weise werden in einem Wechselspiel die Vorstellungen des Benutzers mit den "Maschinenvorstellungen" abgeglichen, so daß das Bildanalyse-Programm am Ende weiß, welche Vorstellungen der Benutzer hat. Die Grundidee des erfindungsgemäßen Verfahrens ist dementsprechend ein Zyklus innerhalb eines Kreisprozesses.

Unter den vorprogrammierten Transformationen sind vorzugsweise die Bildung des Mittelwerts und der Varianz der Bildhelligkeit oder der Bildfarbe in einer Bildpunktumgebung enthalten. Eine weitere vorteilhafterweise vorprogrammierte Transformation zur Bewertung ist eine Radontransformation zur wirksamen Darstellung von Linien und Kanten innerhalb des Bildes. Die vorprogrammierten Transformationen werden dabei beim erfindungsgemäßen Verfahren als völlig gleichwertige, komplementäre und orthogonale Größen verwendet.

Die Unterteilung des normierten Transformationsraumes kann vorzugsweise derart erfolgen, daß diejenigen Bereiche im Transformationsraum identifiziert werden, in denen die normierten Werte jeder der durchgeführten Transformationen den normierten Werten derselben Transformation in den vom Benutzer ausgewählten Bildbereichen entspricht oder nahe kommt.

Im Sinne eines zyklischen Kreisprozesses kann der Benutzer, soweit der Benutzer nach einem ersten Durchlauf des Verfahrens mit dem dargestellten Bild noch nicht zufrieden ist, weitere Bildbereiche auswählen oder die Grenzen der bereits ausgewählten Bildbereiche korrigieren, und anschließend das gesamte Verfahren erneut wiederholt durchlaufen lassen. Alternativ ist es möglich, daß - soweit der Nutzer vor der Wiederholung des Verfahrens keine neuen Bildbereiche ausgewählt oder die Grenzen der ausgewählten Bildbereiche nicht korrigiert hat - das Verfahren wiederholt am selben Bild mit unterschiedlichen Transformationen oder unterschiedlichen Parametern der Transformationen durchgeführt wird.

Die nach ein- oder mehrmaligem Durchlauf des Verfahrens festgelegten Abfolgen von Transformationen und Normierungen oder Klassifikationen können abgespeichert und nachfolgend auf andere ähnliche Bilder angewendet werden.

Bei einem weiterhin vorteilhaften Ausführungsbeispiel werden zusätzlich zu der Darstellung des klassifizierten Bildes zusätzliche Eigenschaften der gewonnenen Klassifikation unter Berücksichtigung der entsprechenden Klassifikationseigenschaften in den vom Benutzer ausgewählten Bildbereichen berechnet und dem Benutzer angezeigt. Anhand dieser zusätzlichen Eigenschaften kann der Benutzer entscheiden, inwieweit die "Maschinenvorstellung" mit seiner eigenen Vorstellung übereinstimmt. Weiterhin ist die Ausgabe numerischer Daten hinsichtlich der jeweils zusammengehörigen Bildbereiche möglich, beispielsweise die Größe oder die Anzahl bestimmter Bereiche. Entsprechende numerische Auswertungen können dann bei ähnlichen Bildern automatisch vorgenommen werden, ohne daß der Nutzer sich die ähnlichen Bilder selbst ansehen muß.

Nachfolgend werden Einzelheiten der vorliegenden Erfindung anhand der Figuren näher erläutert.

Dabei zeigen:

Figur 1              das Blockschaltbild eines Arbeitsplatzes mit einem Computer, der zur Durchführung des erfindungsgemäßen Verfahrens geeignet ist;

Figur 2              ein Struktogramm der beim erfindungsgemäßen Verfahren ablaufenden Schritte;

Figuren 3 bis 10     graphische Darstellungen der beim erfindungsgemäßen Verfahren in den einzelnen Zwischenschritten erzielten Zwischenergebnisse am Beispiel eines Zellbildes; und

Figuren 11 bis 13    graphische Darstellungen der Ergebnisse bei Anwendung des erfindungsgemäßen Verfahrens auf ein einfaches Graubild.

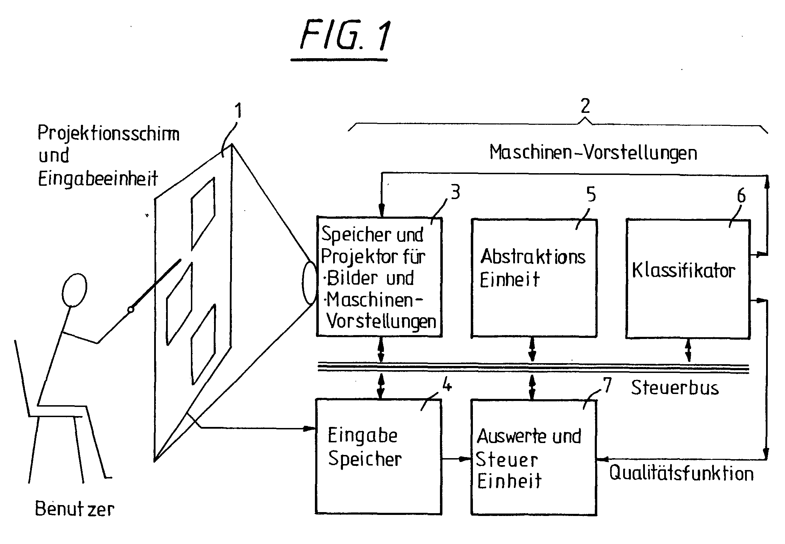

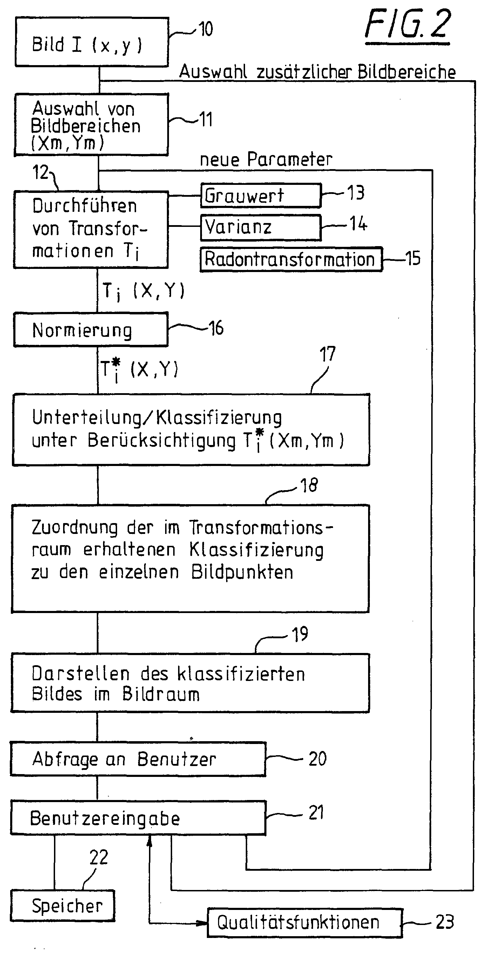

Der in der Figur 1 dargestellte Arbeitsplatz besteht im wesentlichen aus einem Computer (2) und einer an den Computer angeschlossenen Ein- und Ausgabeeinheit (1). Die Ausgabeeinheit kann dabei ein Projektionsschirm, ein Monitor oder Display sein. Die Eingabeeinheit kann eine übliche Tastatur oder Computermaus sein.

Der Computer (2) weist als Hardwarebestandteile einen Bildspeicher (3) auf, in dem das zu analysierende Bild und nach Durchführung des erfindungsgemäßen Verfahrens die vom Computer erzeugte "Maschinenvorstellung" des analysierten Bildes abgespeichert sind. Weiterhin ist als Hardwarebestandteil ein Eingabespeicher (4), in dem die Eingaben des Benutzers abgespeichert werden, vorgesehen. Die weiteren in der Figur 1 dargestellten Module "Abstraktionseinheit" (5), "Klassifikator" (6) und "Auswerte- und Steuereinheit" (7) sind eine Kombination aus Hard- und Software, nämlich aus einem Arbeitsspeicher, einem Computerprozessor und aus im Arbeitsspeicher des Computers gespeicherten Programmmodulen.

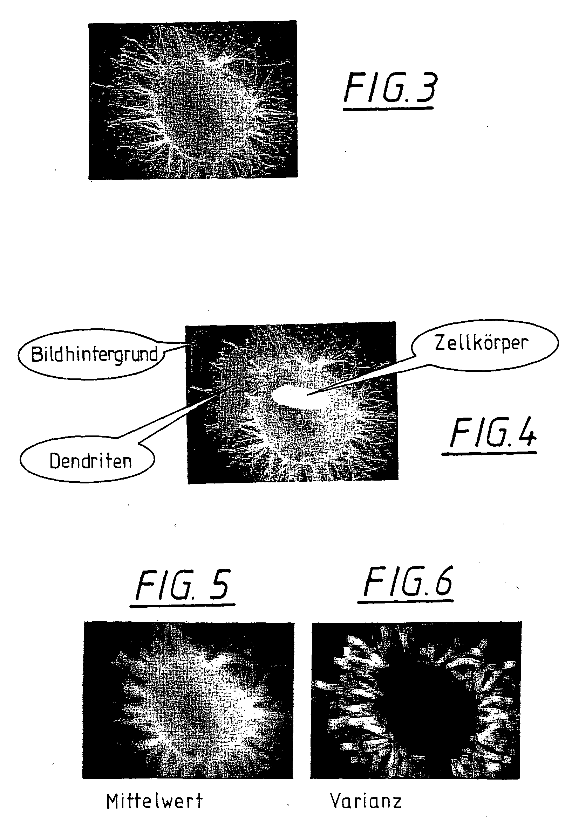

Die einzelnen ablaufenden Schritte beim erfindungsgemäßen Verfahren werden nachfolgend an Hand des Struktogramms in Figur 2 erläutert. Zunächst wird ein im Bildspeicher (3) abgespeichertes Bild in einem Schritt (10) über die Ausgabeeinheit (1) dem Beobachter dargeboten. Dieses 2-dimensionales Bild besteht im allgemeinem aus einer Intensitätsverteilung I als Funktion der Raumkoordinaten x, y. In einem darauf folgenden Schritt (11) wählt der Benutzer über die Eingabeeinheit (1) ihn interessierende Bildbereiche bzw. die Koordinaten der ihn interessierenden Bildbereiche aus. Die Koordinaten dieser Bildbereiche bzw. der ausgewählten Bildpixel seien (xm, ym). Dabei können sowohl einzelne kleine Bildbereiche als auch mehrere große Bildbereiche oder das Gesamtbild ausgewählt werden. Bei Auswahl des Gesamtbildes überläßt der Benutzer zumindest in einem ersten Zyklus des erfindungsgemäßen Verfahrens die weitere Auswertung vollständig dem Bildanalyse-Programm.

In einem nachfolgendem Schritt (12) führt der Computer ausgewählte Transformationen Ti am Bild in sämtlichen Bildpunkten (x, y) durch. Der Index i kennzeichnet dabei die verschiedenen Transformationen. Entsprechende Transformationen können dabei die Bildung des Mittelwerts des Grauwertes (13) des Bildes in den einzelnen Bildpunkten, oder die Bildung der Varianz (14) der Bildhelligkeit jeweils in einer Bildpunktumgebung des Bildes sein. Die Begriffe Grauwert und Varianz der Bildhelligkeit stehen dabei auch stellvertretend für Farbhelligkeit und Varianz der Farbhelligkeit in den verschiedenen Farben. Eine weitere vorprogrammierte Transformation insbesondere zur wirksamen Darstellung von Linien und Kanten ist die Radontransformation (15). Neben diesen drei genannten Transformationen können jedoch auch noch weitere Transformationen vorgesehen sein, die bei Bedarf ausgewählt werden können oder vom Rechner selbst ausgewählt werden.

Im Schritt (12) wird zu jeder der ausgewählten Transformationen eine von den Ortskoordinaten (x, y) abhängige Transformationsfunktion Ti(x,y) berechnet In einem darauf folgenden Normierungsschritt (16) werden die Ergebniswerte der Transformationen auf den Wertebereich [0, 1] normiert. Für die Normierung können verschiedene stetige Funktionen verwendet werden. Besonders günstig hat sich die Sigmoidfunktion

$$y = 1/(1+exp(-g*^{(x-x_o)}))$$

erwiesen, da sie einen unbegrenzten Wertevorrat auf den gewünschten Wertebereich [0,1] abbildet. In einem darauffolgenden Schritt (17) erfolgt eine Unterteilung bzw. Klassifizierung im Transformationsraum. Solange keine weiteren Informationen, beispielsweise über eine Rückkoppelung durch eine Qualitätsfunktion, vorliegen, erfolgt dabei eine grobe Unterteilung der Zahlenbereiche der normierten Transformationsergebnisse Ti* (x, y) in drei Bereiche, nämlich klein, mittel und groß. Weiterhin werden bei der Unterteilung bzw. Klassifizierung die normierten Transformationsergebniswerte Ti* (xm, ym) in den vom Benutzer ausgewählten Bildbereichen berücksichtigt oder an Hand dieser normierten Transformationsergebnisse in den vom Benutzer ausgewählten Bildbereichen Trennvorschriften für die Trennung der Klassen abgeleitet.

In einem nachfolgenden Schritt wird die im Transformationsraum gefundene Klassifizierung den einzelnen Bildpunkten (x, y) zugeordnet und das so klassifizierte Bild in einem Schritt (19) im Bildraum dem Beobachter dargeboten, entweder als eigenständiges Bild oder als überlagerte Darstellung des klassifizierten Bildes mit dem Originalbild.

In einem weiteren Schritt (20) folgt eine Abfrage an den Benutzer, in welcher Weise das Verfahren fortgesetzt werden soll, oder ob das Ergebnis der Bildanalyse bereits mit den Vorstellungen des Benutzers übereinstimmt. In einem nachfolgendem Schritt (21) kann der Benutzer über die Eingabeeinheit (1) unterschiedliche Eingaben vornehmen. Entspricht das Ergebnis der Bildanalyse bereits den Vorstellungen des Benutzers, so werden die bei der Durchführung der Transformationen, der Normierung und der Klassifizierung vorgenommen Parametereinstellungen in einem Schritt (22) abgespeichert und stehen so für eine automatische Anwendung auf ein nachfolgendes Bild oder eine Bildserie mit ähnlichen Merkmalen zur Verfügung.

Ist hingegen der Benutzer mit dem Ergebnis der Bildanalyse noch nicht zufrieden, so kann der Benutzer entweder zusätzliche Bildbereiche im Bild auswählen oder die zuvor vorgenommene Auswahl korrigieren, wobei in diesem Fall das Auswerteverfahren zum Schritt "Auswahl von Bildbereichen" (11) zurückkehrt. Gibt hingegen der Benutzer keine neuen Bildbereiche ein oder korrigiert er die zuvor eingegebenen Bildbereiche nicht, so führt der Rechner das Verfahren erneut mit geänderten Parametereinstellungen für die einzelnen Transformationen Ti oder mit geänderten Transformationen durch. In diesem Fall kehrt das Programm zu dem oben beschriebenen Transformationsschritt (12) zurück. Nach dieser Rückkehr entweder zum Auswahlschritt (11) oder zum Transformationsschritt (12) wird das Verfahren erneut durchlaufen, solange bis der Benutzer mit dem Ergebnis der Analyse zufrieden ist.

Das in soweit bisher ziemlich abstrakt beschriebene Verfahren wird nachfolgend anhand der Figuren 3 bis 10 am Beispiel eines mikroskopischen Bildes einer Nervenzelle beschrieben. In einem allerersten, der eigentlichen Bildanalyse vorgeschalteten Schritt, lädt der Benutzer das ihn interessierende Bild in den Bildspeicher (3) des Rechners, so daß das Bild auf der Ausgabeeinheit (1) dargestellt wird. Das auf der Ausgabeeinheit (1) dargebotene Originalbild einer beispielhaften Nervenzelle ist in Figur 3 dargestellt.

In einem nachfolgenden Schritt (Figur 4) wählt der Benutzer beispielhafte Bildbereiche aus. Bei Bedarf kann der Benutzer diesen ausgewählten Bildbereichen Namen zuordnen, damit für das Bildanalyseprogramm klar ist, ob bei mehreren ausgewählten Bildbereichen diese als verschiedene oder zueinander gehörige Bildbereiche zu betrachten sind. Bildbereiche mit gleichen Namen sind jeweils als zusammengehörig und Bildbereiche mit verschiedenen Namen als zu unterscheiden zu betrachten. Die Namen der Bereiche werden dann ebenfalls abgespeichert. Bei dem in der Figur 4 dargestellten Beispiel hat der Benutzer eine Einteilung in drei Bereiche, den Bildhintergrund, den Zellkörper und die Dendriten vorgenommen. Die Auswahl der entsprechenden Bildbereiche kann dabei einfach mit einer beliebigen Eingabeeinheit für die Bildkoordinaten (z.B. Maus, Rollerball) erfolgen, indem der Benutzer die auszuwählenden Bildbereiche mit dem Cursor grob umfährt und so Grenzen zieht. Handelt es sich um Bereiche, die unterschiedlich zu klassifizieren sind, gibt der Benutzer jedem dieser Bereiche unterschiedliche Namen. Sind hingegen die Bereiche nicht unterschiedlich zu klassifizieren, gibt er diesen Bereichen denselben Namen.

Da dem System keine weiteren Benutzereingaben vorliegen und die vorliegenden Hinweise des Benutzers flächenhaft sind, weist die Auswerte- und Steuereinheit (7) die Abstraktionseinheit (5) an, auf dieses Bild translations- und rotationsinvariante Transformationen anzuwenden. Hierzu eigenen sich insbesondere die Bildung des lokalen Mittelwerts und der lokalen Varianz der Bildhelligkeit oder der Farbhelligkeit für jeden Bildpunkt des Bildes. In der Abstraktionseinheit werden demzufolge zwei transformierte Zwischenbilder erzeugt, nämlich ein Zwischenbild des gleitenden Mittelwertes der Grauwerte (Figur 5) und ein Zwischenbild der Varianz der Grauwerte über vorgegebene Bereiche ( Figur 6). Diese Bilder im Transformationsraum werden jedoch üblicher Weise nicht dem Benutzer dargeboten.

An dieser Stelle sei darauf hingewiesen, daß je nach Hinweis des Benutzers auch andere geeignetere oder gegebenenfalls auch mehr als zwei Transformationen durchgeführt werden können. Wäre beispielsweise einer der vom Benutzer ausgewählten Bildbereiche linienhaft, würde als weitere Transformation eine Radontransformation im Transformationsschritt (12) (Figur 2) durchgeführt.

In einem nachfolgenden Schritt erfolgt nun die automatische Normierung. Diese ist sinnvoll, da je nach Transformation und aktuellem Bildinhalt die Zahlenbereiche der Transformationsergebnisse sehr unterschiedlich sein können, die unterschiedlichen Transformationsergebnisse aber in einer einheitliche Beziehung zueinander gesetzt werden können sollen. Bei der Normierung werden die Zahlenbereiche sämtlicher Transformationen über eine Sigmoidfunktion in den Zahlenbereich zwischen 0 und 1 gebracht.

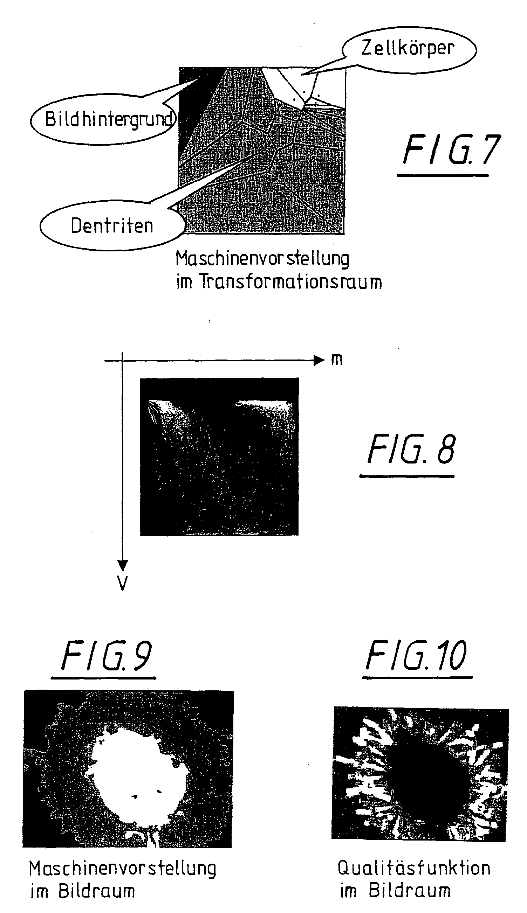

Die Ergebniswerte der einzelnen Transformationen werden nun von der Abstraktionseinheit (5) zum Klassifikator (6) übertragen, der sie in eine Beziehung zueinander setzt. Im oben beschriebenen Fall mit nur zwei Transformationen ist das eine 2-dimensionale Beziehung, die bildhaft als 2-dimensionales Histogramm darstellbar ist. Dieses Histogramm ist in der Figur 8 dargestellt, in dem nach rechts der Mittelwert (m) und nach unten die Varianz (v) aufgetragen ist. Der Klassifikator bestimmt nun an Hand der vorliegenden Benutzerhinweise diejenigen Bereiche im Transformationsraum, die den Vorstellungen des Benutzers entsprechen. Hierzu wird beispielsweise geprüft, welche normierten Transformationsergebniswerte für die verschiedenen durchgeführten Transformationen, in diesem Fall Bildung von Mittelwert und Varianz, in den vom Benutzer ausgewählten Bildbereichen vorliegen. Es werden dann im Transformationsraum diejenigen Punkte zu Klassenzentren bestimmt, in denen die Transformationsergebniswerte mit den Transformationsergebniswerten in den vom Benutzer ausgewählten Bildbereichen übereinstimmen. Die Bildung einer Vorstellung der Maschine besteht nun darin, daß sie die Umgebung jedes Klassenzentrums so weit ausdehnt, bis die Klassengrenzen aneinander anstoßen. In diesem Sinne werden die Hinweise des Benutzers verallgemeinert, bis der gesamte Parameterraum ausgefüllt ist. In der Figur 7 ist die "Maschinenvorstellung" ("Maschinenvorstellung" bezeichnet die Darstellung, wie sie aus der Sicht der Maschine oder von einem Beobachter mit dem Wissen der Maschine gesehen werden kann) im Transformationsraum dargestellt, wobei die jeweiligen Klassenzentren als schwarze Punkte markiert sind. Auch dieses Bild ist für die Beobachtung und Bewertung des Ergebnisses durch den Benutzer nicht notwendig und wird normalerweise nicht angezeigt, sondern liegt nur im Rechner als Zwischenbild vor.

Eine Alternative zur Definition der Klassenbereiche besteht darin, daß die aneinander stoßenden Klassengrenzen explizit durch Trennflächen (hierbei sind n-dimensionale Flächen gemeint, wobei sich die Dimension der Flächen aus der Anzahl der Transformationen ergibt) repräsentiert werden. Für solche Trennflächen werden vorzugsweise Sigmoidfunktionen verwendet, wie sie auch zur Normierung des jeweils gewählten Transformationsraums verwendet werden.

Anschließend wird die im Transformationsraum aufgebaute Klassifizierung den einzelnen Bildpunkten im Bildraum wieder zugeordnet und die so generierte "Maschinenvorstellung" vom Originalbild wird nun zum Bildspeicher (3) zurück übertragen und dem Benutzer in geeigneter Weise im Bildraum dargeboten, beispielsweise als eigenes Bild oder als Überlagerung des Originalbildes und der "Maschinenvorstellung". Die "Maschinenvorstellung" im Bildraum ist in der Figur 9 dargestellt.

Falls die Vorstellung des Benutzers zur Klassifizierung des Objekts nicht mit der dargebotenen "Maschinenvorstellung" übereinstimmt, kann der Benutzer weitere Hinweise für seine Vorstellungen eingeben, beispielsweise indem weitere Bereiche im Bild markiert werden oder die vorgenommenen Markierungen abgeändert werden.

Vorzugsweise dienen weitere Eingaben des Benutzers der Verfeinerung oder der Verallgemeinerung von bereits eingegebenen Bildbereichen im Sinne von Hierarchien. So kann z.B. der Gesamtbereich der Dendriten nach einer allgemeinen, übergeordenten Repräsentation weiter in die einzelnen Dendriten aufgelöst werden. Dies hat den Vorteil, daß die Suche nach einzelnen Dendriten auf das Gebiet der Dendriten beschränkt werden kann, so daß a) Rechenzeit gespart werden kann und b) die Genauigkeit der Bestimmung der einzelnen Dendriten erhöht werden kann, da in diesem Fall für eine erneute, weitere Transformation der gesamte Transformationsraum allein zur Bestimmung der Dendriten ausgeschöpft werden kann.

Gibt der Benutzer keine weiteren Hinweise ein, geht das Programm davon aus, daß die "Maschinenvorstellung" mit der Vorstellung des Benutzers übereinstimmt und der Benutzer kann weitere Analyseaufgaben eingeben, beispielsweise nach der Größe des Zellkörpers. Das Analyseprogramm bestimmt darauf hin die Anzahl der Bildpunkte in der Klasse der Zellkörper und gibt das Ergebnis nach geeigneter Umrechnung des Maßstabes an den Benutzer aus.

An dieser Stelle sei ausdrücklich darauf hingewiesen, daß die oben beschriebene Vorgehensweise sowohl mit beliebiger Anzahl an Benutzerhinweisen als auch mit beliebiger Anzahl an Transformationen durchführbar ist. Weiter können beliebige Auswertefunktionen (Bestimmung der Größe von Bereichen nach Länge, Breite und Fläche, Dichte der Bereiche, usw.) auf die mit dem beschriebenen Verfahren herausgearbeiteten und klassifizierten Strukturen angewandt werden.

Im Klassifikator (6) entstehen neben der "Maschinenvorstellung" des analysierten Bildes noch weitere Informationen. Es kann auch eine Qualität dieser "Maschinenvorstellung" angegeben werden. Betrachtet man die "Maschinenvorstellung" im Transformationsraum (Figur 7) so ist erkennbar, daß die unterschiedlichen Klassengrößen unterschiedlich sind und die Klassenzentren unterschiedliche Abstände von einander haben. Je kleiner die Abstände zwischen den Klassenzentren sind, um so eher besteht die Gefahr einer Verwechslung, bzw. je größer der Abstand zwischen den Klassenzentren ist, um so geringer ist die Gefahr einer Verwechslung. Auch diese zusätzliche Information kann in den Bildraum zurück transformiert werden, indem jedem Bildpunkt der zugehörige Klassenabstand im Transformationsraum als Parameter zugeordnet wird. Diese Qualitätsfunktion im Bildraum, die eine Aussage über die Qualität der "Maschinenvorstellung" angibt, ist für das Bild in Figur 9 in Figur 10 dargestellt. Dabei stehen dunkle Bildpunkte für kleine Abstände der Klassenzentren im Transformationsraum und damit für eine geringe Qualität und eine hohe Verwechslungsgefahr und helle Bildpunkte für große Abstände der Klassenzentren im Transformationsraum für eine hohe Qualität und eine geringe Verwechslungsgefahr.

Diese Qualitätsfunktion wird vom Klassifikator (6) an die Auswerte- und Steuereinheit (7) übertragen und dient dort zur automatischen Entscheidung über die günstigsten Transformationen bzw. die günstigsten Parameter für diese Transformationen. Je nach Rechenzeitbedarf oder den Reaktionswünschen bzw. Genauigkeitswünschen des Benutzers kann hier automatisch ein weiterer Optimierungszyklus eingeleitet werden, in dem das Programm erneut zum Transformationsschritt zurückkehrt und die Transformationen erneut mit geänderten Parametereinstellungen durchführt.

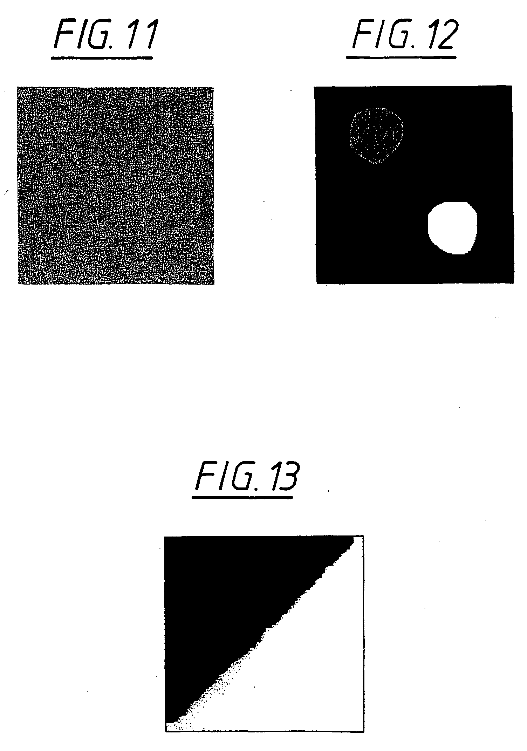

Ein weiteres sehr einfaches Beispiel, das jedoch die Leistungsfähigkeit des erfindungsgemäßen Verfahrens gut veranschaulicht, ist in den Figuren 11 bis 13 dargestellt. Die Figur 11 zeigt das Originalbild, das oberhalb einer von links unten nach rechts oben verlaufenden Diagonalen eine Varianz von 1.0 und unterhalb dieser Diagonalen eine Varianz von 1.4 aufweist. Der mittlere Grauwert ist über das gesamte Bild konstant. Mit dem bloßem Auge ist demzufolge in dem Originalbild nur ein geringfügiger Unterschied in der Körnungsgröße zu erkennen. Markiert jedoch der Beobachter aufgrund entsprechender Erwartungen, daß zwischen den beiden Bildhälften ein Unterschied vorliegen muß, jeweils flächenhafte Bildbereiche oberhalb und unterhalb der Diagonalen und weist diesen beiden Bildbereichen unterschiedliche Namen zu, werden von der Maschine wiederum automatisch die Transformationen Grauwert und Varianz des Grauwertes ausgewählt und durchgeführt und die in der Figur 13 dargestellte "Maschinenvorstellung" erzeugt und dem Benutzer dargeboten. Die Lösung derselben Aufgabe mit den bekannten Verfahren der fraktalen Hierarchie wäre hingegen nicht möglich, da die Varianz des Farb- oder Grauwertes bei der fraktalen Hierarchie nur eine Hilfs- oder Steuergröße ist, während bei dem Verfahren nach der Erfindung die einzelnen durchzuführenden Transformationen als gleichwertige, orthogonale bzw. zueinander komplementäre Größen angesehen werden.

## Patentansprüche

1. Verfahren zur zyklischen, interaktiven Bildanalyse mit den Schritten:

   a) Auswahl interessierender Bildbereiche im Bild durch den Benutzer,
   b) Durchführen vorprogrammierter Transformationen am Bild in allen Bildpunkten oder an einer Auswahl von Bildpunkten,
   c) Durchfuhren einer Normierung der einzelnen Transformationsergebnisse,
   d) Unterteilung des gesamten, normierten Transformationsraumes in Klassen mit dem Ergebniss einer Klassifizierung im Transformationsraum mit Hilfe von Trennvorschriften, die von den Transformationsergebniswerten in den vom Benutzer ausgewählten Bildbereichen abgeleitet werden,
   e) Zuordnung der im Transformationsraum erhaltenen Klassifizierung zu den einzelnen Bildpunkten, und
   f) Darstellung des so klassifizierten Bildes im Bildraum.

**2.** Verfahren nach Anspruch 1, wobei die vorprogrammierten Transformationen, die Bildung des Mittelwerts des Farb- oder Grauwertes und/oder die Bildung der Varianz des Farb- oder Grauwertes in einer Bildpunktumgebung enthalten.

**3.** Verfahren nach Anspruch 1 oder 2, wobei die vorprogrammierten Transformationen eine Radontransformation zur wirksamen Darstellung von Linien und Kanten enthalten.

**4.** Verfahren nach einem der Ansprüche 1 bis 3, wobei die Unterteilung des normierten Transformationsraumes derart erfolgt, daß die Bereiche im Transformationsraum identifiziert werden, in denen die normierten Werte jeder der durchgeführten Transformationen den normierten Werten derselben Transformation in den vom Benutzer ausgewählten Bildbereichen entsprechen.

**5.** Verfahren nach Anspruch 4, wobei für die Normierung der Werte eine Sigmoid-Funktion verwendet wird.

**6.** Verfahren nach einem der Ansprüche 1 bis 5, wobei die Verfahrensschritte a) bis f) wiederholt am selben Bild zur hierarchischen Verfeinerung oder Verallgemeinerung der Klassifizierung durchgeführt werden.

**7.** Verfahren nach einem der Ansprüche 1 bis 6, wobei die Verfahrensschritte b) bis f) wiederholt am selben Bild mit verschiedenen Transformationen oder Parametern der Transformationen durchgeführt werden.

**8.** Verfahren nach einem der Ansprüche 1 bis 7, wobei die während der Interaktion festgelegten Abfolgen von Transformationen, Normierungen und Klassifikationen abgespeichert werden.

**9.** Verfahren nach Anspruch 8, wobei die während der Interaktion festgelegten und abgespeicherten Abfolgen nachfolgend auf andere Bilder angewendet werden.

**10.** Verfahren nach einem der Ansprüche 1 bis 9, wobei zusätzliche Eigenschaften der gewonnenen Klassifikationen unter Berücksichtigung der entsprechenden Klassifikationseigenschaften in den vom Benutzer ausgewählten Bildbereichen berechnet werden.

**11.** Verfahren nach Anspruch 10, wobei zusätzliche Eigenschaften die Farbwerte, die Bildhelligkeit, die Varianz und/oder die Klassenform sind.

**12.** Computersystem, das zur Ausführung eines Verfahrens nach einem der Ansprüche 1 bis 11 geeignet ist und Einrichtungen (1) zum interaktiven Eingeben und Auswählen von Bildbereichen aufweist.

**13.** Computerprogramm, das in den Speicher eines digitalen Computers ladbar ist und einen Softwarecode zur Durchführung eines Verfahrens mit den Schritten nach einem der Ansprüche 1 bis 11 aufweist, wenn das Programm auf dem Computer abläuft.

**14.** Computerprogramm, das in den Speicher eines digitalen Computers ladbar ist und einen Softwarecode aufweist, der den Computer bei in den Speicher geladenem Computerprogramm in die Lage versetzt, ein Verfahren mit den Schritten eines der Ansprüche 1 bis 11 auszuführen.

# FIG. 1

Projektionsschirm und Eingabeeinheit

Maschinen-Vorstellungen

**1**

**2**

**3** Speicher und Projektor für ·Bilder und ·Maschinen-Vorstellungen

**5** Abstraktions Einheit

**6** Klassifikator

Steuerbus

**4** Eingabe Speicher

**7** Auswerte und Steuer Einheit

Qualitätsfunktion

Benutzer

FIG.2

Bild I (x,y) — 10

Auswahl zusätzlicher Bildbereiche

Auswahl von Bildbereichen (Xm,Ym) — 11

neue Parameter

12 — Durchführen von Transformationen $T_i$

Grauwert — 13

Varianz — 14

Radontransformation — 15

$T_i (X,Y)$

Normierung — 16

$T_i^* (X,Y)$

17

Unterteilung/Klassifizierung unter Berücksichtigung $T_i^* (Xm,Ym)$

18

Zuordnung der im Transformationsraum erhaltenen Klassifizierung zu den einzelnen Bildpunkten

19

Darstellen des klassifizierten Bildes im Bildraum

Abfrage an Benutzer — 20

Benutzereingabe — 21

22

Speicher

Qualitätsfunktionen — 23

*FIG.3*

Bildhintergrund

Zellkörper

Dendriten

*FIG.4*

*FIG. 5*

*FIG.6*

Mittelwert

Varianz

Zellkörper

Bildhintergrund

Dentriten

*FIG.7*

Maschinenvorstellung
im Transformationsraum

m

v

*FIG. 8*

*FIG.9*

*FIG.10*

Maschinenvorstellung
im Bildraum

Qualitäsfunktion
im Bildraum

FIG. 11

FIG. 12

FIG. 13